# EUROPÄISCHE PATENTSCHRIFT

(11) **EP 2 999 928 B1**
(45) Veröffentlichungstag und Bekanntmachung des Hinweises auf die Patenterteilung: **28.06.2023**
(21) Anmeldenummer: 14724107.9
(22) Anmeldetag: 16.05.2014
(51) Int. Cl.: A23L 5/10, F24C 7/08

(54) **GARVERFAHREN SOWIE GARGERÄT**
COOKING METHOD AND COOKING DEVICE
PROCÉDÉ ET APPAREIL DE CUISSON

(30) Priorität: 23.05.2013 FR 1354641
(43) Veröffentlichungstag der Anmeldung: 30.03.2016
(73) Patentinhaber: RATIONAL Aktiengesellschaft, 86899 Landsberg am Lech (DE)
(72) Erfinder: FINK, Michael, 82234 Wessling (DE); FUNK, Gerd, 64404 Bickenbach (DE)
(74) Vertreter: Prinz & Partner mbB
(86) Internationale Anmeldenummer: PCT/EP2014/060129
(87) Internationale Veröffentlichungsnummer: WO 2014/187747

(56) Entgegenhaltungen:
- EP-A1- 1 021 979
- EP-A1- 1 021 979
- EP-A2- 2 469 173
- DE-C1- 19 511 621

## Beschreibung

Die Erfindung betrifft ein Verfahren zum Garen von Lebensmitteln in einem Gargerät gemäß dem Oberbegriff des Anspruches 1. Die Erfindung betrifft ferner ein Gargerät gemäß dem Oberbegriff des Anspruches 3.

Solche Gargeräte sind insbesondere aus der Gastronomie (Restaurant- und Kantinenküchen sowie Großgastronomie) bekannt. Sie können als sogenannter Kombidämpfer ausgeführt sein, also als Gargerät, bei dem das zu garende Lebensmittel mit Heißluft und/oder Dampf gegart wird.

Damit der Bediener entlastet wird, sind im Gargerät unterschiedliche automatisierte Garprozesse hinterlegt, mit denen unterschiedliche Lebensmittel reproduzierbar in einen gewünschten Zustand gegart werden können. Bei einem automatischen Garprozess ist wenigstens der gewünschte Endzustand des zu garenden Gargutes in der Steuerung hinterlegt. Automatische Garprozesses arbeiten also ergebnisorientiert. Die Steuerung wählt die passenden Garprozessparameter aus bzw. passt diese vor oder auch während des Garvorgangs an den Zustand oder die Eigenschaften des Garguts, beispielsweise Größe, Gewicht oder Bräunungsgrades des Gargutes, an, um das gewünschte Garergebnis zu erzielen.

Alternativ zu einem automatisierten Garprozess kann ein Bediener auch einen manuellen Garprozess auswählen, bei dem er basierend auf seiner Erfahrung insbesondere Temperatur, Garraumatmosphäre und Garzeit vorgibt. Auch ist es denkbar, dass in der Steuerung Sätze von Garprozessparametern hinterlegt sind, die vom Benutzer manuell ausgewählt werden können. Diese Sätze von Garprozessparametern, auch Garprogramme genannt, können durchaus mehrere Garschritte mit verschiedenen Parametern aufweisen. Sie werden im Gegensatz zu den Garprozessparametern von automatischen Garprozessen jedoch nicht von der Steuerung an den Zustand oder die Eigenschaften des Garguts angepasst sondern bleiben ohne manuelle Einstellung des Benutzers fix. Manuelle Garprozesse sind folglich unflexibel. Lediglich das Ende des Garvorgangs oder eines Garschrittes kann flexibel bestimmt werden, wenn es als Erreichen einer bestimmten Kerntemperatur des Gargutes definiert ist. Den einfachsten Fall eines manuellen Garprozesses bildet der Dauerbetrieb des Gargerätes bei einer bestimmten Temperatur.

Die EP 1 021 979 A1 offenbart beispielsweise ein Verfahren und ein Gerät zum Erwärmen bzw. Garen von Lebensmitteln, bei dem ein Benutzer Parameter für einen Garprozess manuell mittels einer Bedieneinheit am Gargerät eingeben kann oder einen automatisierten Garprozess aus mehreren vordefinierten, in einer Steuerung hinterlegten Garprozessen auswählen kann. Während des Garprozesses wird die von einem Kerntemperaturfühler ermittelte Temperatur in einem Speicher des Gargerätes abgelegt.

Die Aufgabe der Erfindung besteht darin, ein Verfahren zum Garen von Lebensmitteln sowie ein Gargerät zu schaffen, mit dem einem Bediener eine höhere Flexibilität ermöglicht wird.

Die Aufgabe wird gelöst durch ein Verfahren nach Anspruch 1. Bei einem Gargerät der eingangs genannten Art ist zur Lösung dieser Aufgabe vorgesehen, dass die Steuerung für die Durchführung des obigen Verfahrens eingerichtet ist und das Bedienfeld einen Umschalter bietet, mit dem der Bediener aus einem automatisierten Garprozess in einen manuellen Garprozess wechseln kann, und umgekehrt. Die Erfindung beruht auf dem Grundgedanken, einem Bediener mehr Flexibilität dadurch zu geben, dass ihm die Möglichkeit eröffnet wird, beliebig zwischen automatisierten Garprozessen und manuellen Garprozessen zu wechseln. Dies ist möglich, da erfindungsgemäß ein für den aktuell ablaufenden Garprozess signifikanten Garprozessparameter protokolliert und gespeichert wird. Startet beispielsweise der Bediener einen manuellen Garprozess, speichert das Gargerät im Hintergrund signifikante Garprozessparameter wie den Energieeintrag in das zu garende Lebensmittel. Wenn der Bediener dann zu einem späteren Zeitpunkt zu einem automatisierten Garprozess wechselt, ist dem Gargerät aufgrund der mitprotokollierten Garprozessparameter bekannt, in welchem Zustand sich das zu garende Lebensmittel zu diesem Zeitpunkt befindet. Daher können dann für den ausgewählten automatisierten Garprozess geeignete Parameter verwendet werden, beispielsweise Garraumtemperatur und Gardauer, mit denen der gewünschte Zustand des Lebensmittels automatisiert erreicht wird. Der Wechsel zwischen den unterschiedlichen Garprozessen ist auch umgekehrt möglich; der Bediener kann mit einem automatisierten Garprozess starten und dann intervenieren, indem er bestimmte Garparameter manuell beeinflusst. Auch in diesem Fall ist es dem Bediener weiterhin möglich, wieder zurück zu einem automatisierten Garprozess zu wechseln. Grundsätzlich ist der Wechsel zwischen den unterschiedlichen Garprozessen beliebig oft möglich. Dadurch, dass die gewünschten Eigenschaften des fertig gegarten Lebensmittels von der Steuerung gespeichert werden, wenn der Bediener aus einem automatisierten Garprozess zu einem manuellen Garprozess wechselt, ist gewährleistet, dass "im Hintergrund" die gewünschten Eigenschaften des fertig gegarten Lebensmittels noch verfügbar sind, wenn der Bediener aus dem manuellen Garprozess wieder zurück zu einem automatisierten Garprozess wechselt. Indem beim Wechsel von einem manuellen Garprozess zu einem automatisierten Garprozess anhand der im Speicher gespeicherten signifikanten Garprozessparameter von der Steuerung überprüft wird, ob die gewünschten Eigenschaften des fertig gegarten Lebensmittels erreicht werden können, ermöglichen die zum Zeitpunkt des Wechsels vom manuellen Garprozess zum automatisierten Garprozess verfügbaren signifikanten Garprozessparameter es der Steuerung, den aktuellen Zustand des gegarten Lebensmittels zu bestimmen. In einem einfachen Beispiel kann als signifikanter Garprozessparameter die Kerntemperatur von Roastbeef angenommen werden. Wechselt der Bediener in einen automatisierten Garprozess mit der gewünschten Eigenschaft "Roastbeef rosa", wenn die Kerntemperatur des Lebensmittels bereits 64 °C beträgt, kann das Gargerät das Lebensmittel nicht mehr in den gewünschten Zustand bringen. Ferner wird dem Bediener hierbei ein Hinweis angezeigt, wenn die gewünschten Eigenschaften des fertig gegarten Lebensmittels nicht erreicht werden können. Dies ermöglicht dem Bediener, den Garprozess entweder abzubrechen oder so zu modifizieren, dass ein für ihn akzeptables Ergebnis erreicht wird.

Gemäß einer Ausgestaltung ist vorgesehen, dass die gewünschten Eigenschaften des fertig gegarten Lebensmittels von der Steuerung abgefragt werden, wenn der Bediener aus einem manuellen Garprozess, der auf der Basis von manuell definierten Parametern gestartet wurde, erstmals zu einem automatisierten Garprozess wechselt. Diese Abfrage kann explizit erfolgen oder aber indirekt dadurch, dass der Bediener beim Wechsel in den automatisierten Garprozess einen solchen auswählt, bei dem die gewünschten Eigenschaften des fertig gegarten Lebensmittels bekannt sind. Unabhängig davon, ob die Abfrage explizit oder implizit erfolgt, wird mit diesem Schritt gewährleistet, dass der Steuerung des Gargeräts bekannt ist, welchen Zustand das gegarte Lebensmittel am Ende des automatisierten Garprozesses haben soll.

Es kann auch vorgesehen sein, dass dem Bediener ein Vorschlag für alternative Eigenschaften des fertig gegarten Lebensmittels gemacht wird, wenn die gewünschten Eigenschaften nicht erreicht werden können. In diesem Fall wählt das Gargerät aus der Vielzahl der hinterlegten automatisierten Garprozesse und der zugehörigen Lebensmitteleigenschaften diejenige Eigenschaft aus, die dem eigentlich gewünschten Ergebnis am nächsten kommt.

Falls der Bediener die vorgeschlagenen alternativen Eigenschaften akzeptiert, werden diese vorzugsweise als neue gewünschte Eigenschaften gespeichert. Dies gewährleistet, dass bei einem erneuten Wechsel zu einem manuellen Garprozess und wieder zurück zu einem automatisierten Garprozess gewünschte Eigenschaften für das zu garende Lebensmittel zur Verfügung stehen, welche die Basis für den erneut automatisiert ablaufenden Garprozess sind.

Erfindungsgemäß ist vorgesehen, dass dem Bediener bei einem Wechsel von einem automatisierten Garprozess zu einem manuellen Garprozess ein Hinweis angezeigt wird, wenn die gewünschten Eigenschaften des fertig gegarten Lebensmittels mit den neu gewählten Parametern nicht erreicht werden können. Ein solcher Hinweis ist beispielsweise dann sinnvoll, wenn der Bediener, kurz bevor ein beispielsweise über die Kerntemperatur definierter Endzustand in einem automatisierten Garprozess erreicht wird, zu einem manuellen Garprozess wechselt und die Garraumtemperatur erhöht. Bei dieser Konstellation ist absehbar, dass die Kerntemperatur im Inneren des Lebensmittels sehr schnell Werte oberhalb des eigentlich gewünschten Bereichs erreicht.

Bei dem signifikanten Garprozessparameter kann es sich ferner um den Energieeintrag in das zu garende Lebensmittelhandeln. Grundsätzlich kann aber jeder Parameter protokolliert werden, der einen Einfluss auf die Eigenschaften des zu garenden Lebensmittels hat.

Gemäß einer Ausgestaltung der Erfindung weist das Gargerät einen Energiezähler auf. Dies ermöglicht, einen der am meisten aussagekräftigen Parameter als den signifikanten Garprozessparameter zu protokollieren, nämlich den Gesamtenergieeintrag in das zu garende Lebensmittel.

Die Erfindung wird nachfolgend anhand verschiedener Beispiele und den beigefügten Zeichnungen beschrieben. In diesen zeigen:
- Figur 1 schematisch ein erfindungsgemäßes Gargerät;
- Figur 2 ein Diagramm, in welchem die Auswirkung eines manuellen Eingriffs auf die Kerntemperatur erläutert ist, die als Führungsgröße eines automatisierten Garprozesses verwendet wird; und
- Figur 3 ein weiteres Diagramm, in welchem die Auswirkung eines manuellen Eingriffs auf die mittels eines automatisierten Garprozesses zu erzielende Bräunung erläutert wird.

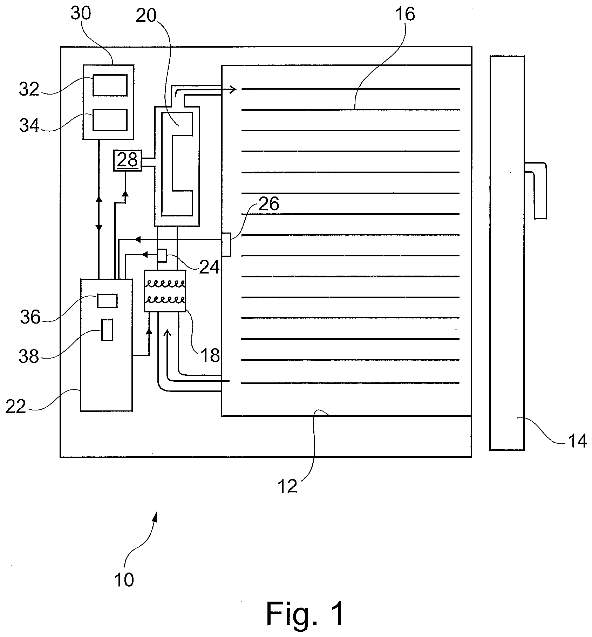

In Figur 1 ist schematisch ein Gargerät 10 gezeigt, das für den Profi-Einsatz in der Großgastronomie, in Restaurants, Kantinen, etc. vorgesehen ist. Es enthält einen Garraum 12, der von außen durch Öffnen einer Tür 14 zugänglich ist. Im Garraum kann hier schematisch angedeutetes Garzubehör 16 angeordnet sein, beispielsweise Backbleche, Grillplatten, Backformen oder Roste, auf den sich zu garende Produkte befinden.

Zur Erzeugung einer gewünschten Garraumatmosphäre sind eine Heizvorrichtung 18 und ein Lüfterrad 20 vorgesehen, mit denen die im Garraum 12 vorhandene Atmosphäre erwärmt und umgewälzt werden kann. In die Heizvorrichtung 18 kann dabei auch ein Dampfmodul integriert sein, um eine bestimmte Feuchte in der Garraumatmosphäre zu erzielen.

Weitere Bauteile wie eine Entlüftung des Garraums 12 zur Außenatmosphäre, ein Ablöschkasten, etc. sind der besseren Übersichtlichkeit halber hier nicht dargestellt.

Das Gargerät 10 enthält auch eine Steuerung 22, die unter anderem Signale von einem Temperatursensor 24 empfängt, der hier unmittelbar stromabwärts der Heizvorrichtung 18 angeordnet ist, sowie einem Feuchtesensor 26, der hier im Inneren des Garraums 12 angeordnet ist. Von der Steuerung 22 werden unter anderem die Heizvorrichtung 18 und ein Antriebsmotor 28 des Lüfterrades angesteuert. Weiterhin ist eine Bedieneinheit 30 vorgesehen, die ein Eingabefenster 32 und ein Ausgabefenster 34 enthält. Das Eingabefenster 32 und das Ausgabefenster 34 können auch zu einer Multifunktionseinheit zusammengefasst sein. Weiterhin kann die Bedieneinheit 30 so ausgestaltet sein, dass sie akustische Signale abgibt, beispielsweise einen Hinweiston als Eingabebestätigung oder einen Signalton bei Erreichen des Endes eines Garprozesses.

In der Steuerung 22 sind eine Vielzahl von automatisierten Garprozessen hinterlegt, die unterschiedlichen zu garenden Lebensmitteln und unterschiedlichen Eigenschaften zugeordnet sind, welche die zu garenden Lebensmittel bei Abschluss des automatisierten Garprozesses haben sollen. Diese automatisierten Garprozesse können über das Eingabefenster 32 vom Bediener ausgewählt werden. Im Ausgabefenster kann dem Bediener dann zum einen der ausgewählte automatisierte Garprozess angezeigt werden. Weiterhin können beispielsweise die verbleibende Garzeit, die Garraumtemperatur oder der als Nächstes anstehende Teilprozess (zum Beispiel Dämpfen oder Anbraten) angezeigt werden.

Das Eingabefenster 32 dient auch dazu, zwischen einem automatisierten Garprozess und einem manuellen Garprozess zu wechseln. Unter einem automatisierten Garprozess wird dabei ein Garprozess verstanden, bei dem ein Bediener mindestens einen wesentlichen Parameter fest vorgibt, sodass der Garprozess nicht mehr von der Steuerung 22 gesteuert wird.

Der Wechsel von einem automatisierten Garprozess zu einem manuellen Garprozess kann unmittelbar dadurch erfolgen, dass der Bediener über die Eingabevorrichtung 32 bestimmte Parameter fest vorgibt, beispielsweise die Garraumtemperatur. Eine solche Intervention durch den Bediener kann von der Steuerung unmittelbar so interpretiert werden, dass der Bediener den aktuell ablaufenden automatisierten Garprozess abbrechen möchte.

Alternativ kann vorgesehen sein, dass der Bediener die Möglichkeit hat, den aktuell ablaufenden automatisierten Garprozess abzubrechen. In diesem Fall werden dann vorzugsweise von der Steuerung 22 diejenigen Parameter aktiv abgefragt, die für einen Garprozess notwendig sind, insbesondere die Garraumtemperatur und die Feuchte im Garraum.

Der Wechsel zu einem manuellen Garprozess kann auch in einer Mischform aus den beiden vorgenannten Varianten erfolgen, indem bei manueller Eingabe eines Parameters der Bediener zunächst aufgefordert wird, den Abbruch des automatisierten Garprozesses zu bestätigen. Ist die Bestätigung erfolgt, können die für den manuellen Garprozess nötigen Parameter nachfolgend von der Steuerung über die Bedieneinheit 30 vom Bediener abgefragt werden.

Es ist jederzeit möglich, von einem manuellen Garprozess in einen automatisierten Garprozess zu wechseln. Auch dies erfolgt über das Eingabefenster 32, wobei der Bediener entweder einen automatisierten Garprozess ganz neu auswählen kann (insbesondere wenn der aktuelle Garprozess als manueller Garprozess gestartet wurde) oder einen früheren automatisierten Garprozess fortsetzen kann, wenn dieser durch die manuelle Eingabe von Parametern unterbrochen wurde.

Bei jedem Wechsel von einem automatisierten Garprozess zu einem manuellen Garprozess oder umgekehrt wirkt das Eingabefenster 32 als Umschalter. Es können aber auch andere Eingabearten vorgesehen sein, um von einem Garmoduls zu einem anderen umzuschalten.

Wesentliche Voraussetzung für die Möglichkeit, aus einem manuellen Garprozess in einen automatisierten Garprozess zu wechseln, ist allgemein ausgedrückt, dass der Steuerung 22 jederzeit ausreichend Informationen über den aktuellen Zustand des zu garenden Lebensmittels bekannt sind. Zu diesem Zweck ist ein Speicher 36 vorgesehen, mit dem mindestens ein signifikanter Garprozessparameter kontinuierlich von der Steuerung 22 protokolliert wird. Bei diesem Garprozessparameter kann es sich um den Energieeintrag in das zu garende Lebensmittel, den Verlauf der Kerntemperatur, die Garraumtemperatur, die Lüfterdrehzahl und/oder die Feuchte im Garraum handeln. Dabei können auch mehrere dieser Parameter kontinuierlich mitgeschrieben werden.

Es ist möglich, dass lediglich die signifikanten Garprozessparameter von der Steuerung 22 mitprotokolliert werden und erst bei Bedarf, also beim Übergang von einem manuellen zu einem automatisierten Garprozess, ausgewertet werden, um die benötigten Informationen über den Zustand des Lebensmittels zu erhalten. Es ist auch möglich, dass die Garprozessparameter fortlaufend von der Steuerung 22 ausgewertet werden, so dass ständig die vollständigen Informationen über den Zustand des garenden Lebensmittels verfügbar sind.

Gemäß einer Ausgestaltung der Erfindung kann der Speicher 36 einen Energiezähler 38 enthalten. Der Energiezähler integriert während eines Garprozesses den spezifischen Wärmeeintrag in das zu garende Produkt über der Garzeit. "Spezifischer Wärmeeintrag" ist dabei die je Flächeneinheit der Oberfläche des zu garenden Produkts aufgenommene Energiemenge pro Zeiteinheit. Hierbei werden der Wärmeübergangskoeffizient von der Garraumatmosphäre in das zu garende Lebensmittel, die treibende Temperaturdifferenz zwischen der Temperatur im Garraum und der Oberflächentemperatur des zu garenden Produkts sowie weitere Parameter berücksichtigt, beispielsweise die Feuchte im Garraum. Weitere Details, wie der spezifische Wärmeeintrag integriert wird, können der EP 2 469 173 A2 entnommen werden, auf die vollumfänglich Bezug genommen wird.

Der im Speicher 36 mitprotokollierte signifikante Garprozessparameter ist vergleichbar mit der aktuellen Position, die in einem Navigationssystem eines Kraftfahrzeugs mitgeschrieben wird. Unabhängig davon, ob der Fahrer bei Beginn seiner Reise ein Ziel ausgewählt hat (vergleichbar dem Endzustand des zu garenden Lebensmittels), kann der Fahrer jederzeit eine Zielführung aktivieren (also einen automatisierten Garprozess starten), woraufhin nahtlos ausgehend von der aktuellen Position (also den mitprotokollierten Garprozessparametern wie beispielsweise der Kerntemperatur oder dem Energieeintrag) die Zielführung startet (also ein Garprozess mit geeigneten Parametern, um die gewünschten Eigenschaften des zu garenden Lebensmittels zu erzielen). In gleicher Weise wie bei einem Navigationsgerät kann der Bediener des Gargeräts beliebig die vorgegebene Route verlassen, also zwischenzeitlich einen manuellen Garprozess wählen, indem bestimmte Parameter vorgegeben werden, und auch wieder zur vorgegebenen Route zurückkehren, also wieder einen automatisierten Garprozess aktivieren.

Mit einer manuellen Intervention kann ein Bediener beispielsweise die Bräunung eines zu garenden Lebensmittels beeinflussen. Stellt der Bediener fest, dass er beispielsweise ein Roastbeef außen stärker angebraten haben möchte, als dies bei dem aktuell verwendeten automatisierten Garprozess der Fall ist, kann er kurzzeitig eine höhere Garraumtemperatur wählen. Diese sorgt für eine stärkere Bräunung.

Solange diese höhere Temperatur nur kurzzeitig gewählt wird und der Bediener wieder vergleichsweise rasch zu einem automatisierten Garprozess wechselt, ergeben sich hierdurch keine größeren Schwierigkeiten. Das Gargerät berücksichtigt mit seiner Steuerung automatisch den tatsächlichen Energieeintrag, der aufgrund der höheren Garraumtemperatur oberhalb des Energieeintrags liegt, wie er sich bei einem durchgehend automatisierten Garprozess ergeben hätte. Dementsprechend kann entweder die Restgarzeit verringert werden, oder es kann für die Restgarzeit eine etwas niedrigere Garraumtemperatur ausgewählt werden.

Etwas aufwendiger wird es, wenn die Intervention des Bedieners derart massiv ist, dass die ursprünglich ausgewählten Eigenschaften des zu garenden Produkts nicht mehr eingehalten werden können. Dies ist insbesondere dann der Fall, wenn aufgrund der manuellen Intervention des Bedieners der Energieeintrag in das zu garende Produkt derart hoch ist, dass eine zu starke Bräunung oder eine zu hohe Kerntemperatur erreicht wird. Dies lässt sich, wenn nach der manuellen Intervention wieder zu einem automatisierten Garprozess übergegangen wird, nicht mehr rückgängig machen. Wenn beispielsweise Fisch, der eigentlich als Ergebnis des automatisierten Garprozesses glasig gegart sein soll, beim Übergang vom manuellen Garprozess zum automatisierten Garprozess bereits vollständig durchgegart ist, kann nicht mehr glasig serviert werden.

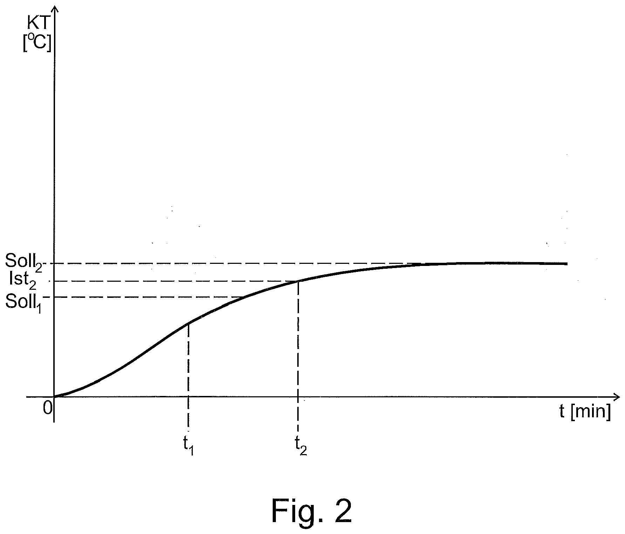

Eine Option in einer solchen Situation besteht darin, dass dem Bediener beim Übergang zum automatisierten Garprozess angezeigt wird, dass das zu garende Lebensmittel bereits ausreichend gegart ist und nicht weiter gegart werden sollte. Weiterhin kann dem Bediener angezeigt werden, welchen Zustand das Lebensmittel bereits erreicht hat. In Situationen, bei denen die manuelle Einwirkung des Bedieners keine so gravierenden Auswirkungen hat, kann dem Bediener beim Übergang zu einem automatisierten Garprozess ein Vorschlag für geänderte Eigenschaften des zu garenden Lebensmittels gemacht werden. Dieser Vorschlag berücksichtigt den aktuellen Zustand des zu garenden Lebensmittels sowie die in der Steuerung hinterlegten Informationen über weitere Garprozessschritte (und den damit verbundenen Energieeintrag), die noch durchgeführt werden müssen, beispielsweise Nachziehen oder Bräunungsphase. Ein Beispiel für eine solche Anpassung wird nachfolgend anhand von Figur 2 erläutert.

In Figur 2 ist der Verlauf der Kerntemperatur KT über der Zeit für das Gargut Roastbeef aufgetragen. Die Temperatur Soll₁ ist die vom Bediener für einen automatisierten Garprozess vorgewählte Kerntemperatur, um den Zustand "blutig" zu erzielen. Zum Zeitpunkt t₁ interveniert der Bediener manuell, um eine stärkere Bräunung des Lebensmittels zu erzielen; er erhöht die Garraumtemperatur. Zum Zeitpunkt t₂ kehrt der Bediener wieder zum automatisierten Garprozess zurück. Zu diesem Zeitpunkt befindet sich die Kerntemperatur jedoch bereits auf einer Temperatur Ist₂, die oberhalb der Temperatur Soll₁ liegt. Es ist offensichtlich, dass der ursprünglich gewünschte Zustand "blutig" nicht mehr möglich ist. Der Steuerung des Gargeräts ist außerdem bekannt, dass die Kerntemperatur im Roastbeef, selbst wenn zum Zeitpunkt t₂ der Garprozess sofort abgebrochen würde, noch etwas ansteigt, da aufgrund der im Fleisch gespeicherten Wärmemenge und der Wärmeleitung weiterhin Wärme zur Mitte des Roastbeefs wandert, auch wenn die Oberfläche auf Umgebungstemperatur gebracht wird. Die Steuerung schlägt dann dem Bediener einen neuen Produktzustand vor, welcher der nun noch möglichen Kerntemperatur Soll₂ entspricht. Diese liegt aufgrund des unvermeidbaren Nachgarens etwa 3 °C oberhalb der Temperatur Ist₂ beim Übergang vom manuellen zum automatisierten Garprozess. Der automatisierte Garprozess kann dann in der Form einer Ruhephase mit geringer Garraumtemperatur fortgesetzt werden.

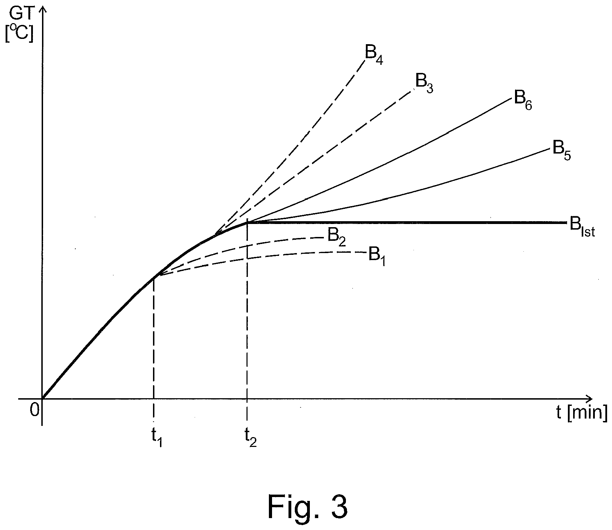

In Figur 3 ist ein Diagramm dargestellt, in welchem der Einfluss der Garraumtemperatur auf die Bräunung erläutert wird. Zur Vereinfachung wird dabei angenommen, dass eine höhere Garraumtemperatur auch zu einer entsprechend höheren Bräunung führt; die Garraumtemperatur kann in diesem Diagramm vereinfachend als Synonym für die Bräunung verstanden werden.

Wenn ein Garprozess zum Zeitpunkt 0 startet, kann der Bediener aus einer Vielzahl von verschiedenen Bräunungen beispielsweise eines Roastbeefs auswählen, das sich im Garraum befindet. Diese verschiedenen Bräunungen sind hier mit B₁ bis B₄ bezeichnet.

Wenn zum Zeitpunkt t₁ eine manuelle Intervention erfolgt, die bis zum Zeitpunkt t₂ andauert, ist zu diesem Zeitpunkt eine Bräunung B_{Ist} erreicht, die oberhalb der beiden Bräunungen B₁ und B₂ liegt. Wenn der Bediener zu diesem Zeitpunkt wieder zu einem automatisierten Garprozess wechselt, werden ihm die Bräunungen B₁ und B₂ als mögliche Zielparameter nicht mehr angeboten. Als Alternativen werden ihm beispielsweise die Bräunungen B_{Ist}, B₅ und B₆ angeboten.

Obwohl in den Diagrammen der Figuren 2 und 3 zum Zwecke der besseren Übersichtlichkeit ein Garprozess gezeigt ist, der automatisiert beginnt und lediglich einmal durch eine manuelle Intervention unterbrochen wird, kann ein automatisierter Garprozess auch mehrfach manuell unterbrochen und dann wieder aufgenommen werden. Es ist auch möglich, dass der Bediener einen Garprozess manuell startet und zu einem beliebigen Zeitpunkt in einen automatisierten Garprozess wechselt. Dies kann beispielsweise der Fall sein, wenn der Bediener eigentlich vollständig manuell garen wollte, aber zu einem bestimmten Zeitpunkt seine Aufmerksamkeit einer anderen Tätigkeit zuwenden muss. In diesem Fall kann er den Garprozess an die Steuerung des Gargeräts abgeben, die dann die vom Bediener ausgewählten Eigenschaften für das zu garende Lebensmittel realisiert.

## Patentansprüche

1. Verfahren zum Garen von Lebensmitteln in einem Gargerät (10), wobei ein Bediener aus einer Vielzahl von vordefinierten automatisierten Garprozessen einen bestimmten Garprozess und/oder manuell Parameter für einen manuellen Garprozess auswählen kann, wobei in einem Speicher (36) ab Beginn des Garprozesses mindestens ein signifikanter Garprozessparameter kontinuierlich von einer Steuerung (22) des Gargerätes (10) protokolliert wird, wobei es sich beim signifikanten Garprozessparameter um den Verlauf der Kerntemperatur, die Garraumtemperatur, die Lüfterdrehzahl und/oder die Feuchte im Garraum handelt, wobei für den Bediener die Möglichkeit besteht, aus einem manuellen Garprozess zu einem automatisierten Garprozess zu wechseln, und für den Bediener die Möglichkeit besteht, aus einem automatisierten Garprozess, zu dem wenigstens der gewünschte Endzustand des zu garenden Garguts in einer Steuerung (22) des Gargerätes (10) hinterlegt ist, zu einem manuellen Garprozess zu wechseln, indem der Bediener Garparameter des automatisierten Garprozess manuell beeinflusst, wobei beim automatisierten Garprozess von einer Steuerung (22) des Gargerätes (10) die passenden Garprozessparameter ausgewählt bzw. diese vor oder auch während des Garvorgangs an den Zustand oder die Eigenschaften des Garguts anpasst werden, wobei die gewünschten Eigenschaften des fertig gegarten Lebensmittels von der Steuerung (22) gespeichert werden, wenn der Bediener aus einem automatisierten Garprozess zu einem manuellen Garprozess wechselt,
wobei beim Wechsel von einem manuellen Garprozess zu einem automatisierten Garprozess anhand der im Speicher (36) gespeicherten signifikanten Garprozessparameter von der Steuerung (22) überprüft wird, ob die gewünschten Eigenschaften des fertig gegarten Lebensmittels erreicht werden können, wobei dem Bediener ein Hinweis angezeigt wird, wenn die gewünschten Eigenschaften des fertig gegarten Lebensmittels nicht erreicht werden können.

2. Verfahren nach Anspruch 1, **dadurch gekennzeichnet, dass** dem Bediener bei einem Wechsel von einem automatisierten Garprozess zu einem manuellen Garprozess ein Hinweis angezeigt wird, wenn die gewünschten Eigenschaften des fertig gegarten Lebensmittels mit den neu gewählten Parametern nicht erreicht werden können.

3. Gargerät zum Garen von Lebensmitteln, mit einer Steuerung (22), in der eine Vielzahl von vordefinierten automatisierten Garprozessen hinterlegt ist, und einer Bedieneinheit (30), mittels der ein Bediener einen der automatisierten Garprozesse auswählen und/oder manuell Parameter für einen manuellen Garprozess eingeben kann, wobei die Steuerung (22) einen Speicher (36) für mindestens einen signifikanten Garprozessparameter aufweist, **dadurch gekennzeichnet, dass** die Steuerung (22) für die Durchführung des Verfahrens gemäß einem der vorhergehenden Ansprüche eingerichtet ist und die Bedieneinheit (30) einen Umschalter (32) anbietet, mit dem der Bediener aus einem automatisierten Garprozess in einen manuellen Garprozess wechseln kann, und umgekehrt.

4. Gargerät nach Anspruch 3, **dadurch gekennzeichnet, dass** das Gargerät einen Energiezähler (38) aufweist.

## Claims

1. A method of cooking food in a cooking device (10), an operator being able to select a specific cooking process from a multitude of predefined automated cooking processes and/or manually select parameters for a manual cooking process, wherein, from the start of the cooking process, at least one significant cooking process parameter is continuously logged in a memory (36) by a control unit (22) of the cooking device (10), the significant cooking process parameter being the profile of the core temperature, the cooking chamber temperature, the fan speed and/or the humidity within the cooking chamber, wherein it is possible for the operator to change from a manual cooking process to an automated cooking process, and it is possible for the operator to change from an automated cooking process for which at least the desired final state of the food to be cooked is stored in a control unit (22) of the cooking device (10) to a manual cooking process by the operator manually influencing cooking parameters of the automated cooking process, wherein in the automated cooking process, a control unit (22) of the cooking device (10) selects the appropriate cooking process parameters and/or, prior to or during the cooking procedure, adapts them to the state or the properties of the food to be cooked, wherein the desired properties of the food cooked to completion are stored by the control unit (22) when the operator changes from an automated cooking process to a manual cooking process, wherein when there is a change from a manual cooking process to an automated cooking process, the control unit (22) checks, based on the significant cooking process parameters stored in the memory (36), whether the desired properties of the food cooked to completion can be obtained, wherein a notice is displayed to the operator if the desired properties of the food cooked to completion cannot be obtained.

2. The method according to claim 1, **characterized in that** when there is a change from an automated cooking process to a manual cooking process, a notice is displayed to the operator if the desired properties of the food cooked to completion cannot be obtained with the newly selected parameters.

3. A cooking device for cooking food, comprising a control unit (22) in which a multitude of predefined automated cooking processes are stored, and an operating unit (30) by means of which an operator can select one of the automated cooking processes and/or can manually input parameters for a manual cooking process, wherein the control unit (22) includes a memory (36) for at least one significant cooking process parameter, **characterized in that** the control unit (22) is configured to carry out the method according to any of the preceding claims, and the operating unit (30) offers a changeover switch (32) by which the operator can change from an automated cooking process to a manual cooking process, and vice versa.

4. The cooking device according to claim 3, **characterized in that** the cooking device includes an energy meter (38).

## Revendications

1. Procédé de cuisson de produits alimentaires dans un appareil de cuisson (10), un opérateur étant apte à sélectionner un processus de cuisson déterminé parmi une pluralité de processus de cuisson automatisés prédéfinis et/ou à sélectionner manuellement des paramètres pour un processus de cuisson manuel, au moins un paramètre de processus de cuisson significatif étant continuellement consigné dans une mémoire (36) par une commande (22) de l'appareil de cuisson (10) dès le début du processus de cuisson, le paramètre de processus de cuisson significatif étant la variation de la température à coeur, la température de la chambre de cuisson, la vitesse de rotation de la soufflante et/ou l'humidité dans la chambre de cuisson, l'opérateur ayant la possibilité de passer d'un processus de cuisson manuel à un processus de cuisson automatisé, et l'opérateur ayant la possibilité de passer d'un processus de cuisson automatisé, pour lequel au moins l'état final souhaité du produit de cuisson à cuire est enregistré dans une commande (22) de l'appareil de cuisson (10), à un processus de cuisson manuel par l'influence manuel de l'opérateur sur des paramètres de cuisson du processus de cuisson automatisé, les paramètres de processus de cuisson appropriés, dans le processus de cuisson automatisé, étant sélectionnés par une commande (22) de l'appareil de cuisson (10) ou étant adaptés à l'état ou aux propriétés du produit à cuire avant ou aussi pendant la procédure de cuisson, les propriétés souhaitées du produit alimentaire dont la cuisson est terminée étant enregistrées par la commande (22) lorsque l'opérateur passe d'un processus de cuisson automatisé à un processus de cuisson manuel, la commande (22), lors d'un passage d'un processus de cuisson manuel à un processus de cuisson automatisé, vérifiant sur la base des paramètres de processus de cuisson significatifs enregistrés dans la mémoire (36) si les propriétés souhaitées du produit alimentaire dont la cuisson est terminée peuvent être obtenues, une information étant affichée à l'opérateur lorsque les propriétés souhaitées du produit alimentaire dont la cuisson est terminée ne peuvent pas être obtenues.

2. Procédé selon la revendication 1, **caractérisé en ce que** lors d'un passage d'un processus de cuisson automatisé à un processus de cuisson manuel, une indication est affichée à l'opérateur lorsque les propriétés souhaitées du produit alimentaire dont la cuisson est terminée ne peuvent pas être obtenues avec les nouveaux paramètres sélectionnés.

3. Appareil de cuisson pour la cuisson de produits alimentaires, comprenant une commande (22) dans laquelle une pluralité de processus de cuisson automatisés prédéfinis est enregistrée, et une unité de fonctionnement (30) au moyen de laquelle un opérateur peut sélectionner l'un des processus de cuisson automatisés et/ou peut manuellement entrer des paramètres pour un processus de cuisson manuel, la commande (22) présentant une mémoire (36) pour au moins un paramètre de cuisson significatif, **caractérisé en ce que** la commande (22) est aménagée pour la mise en oeuvre du procédé selon l'une des revendications précédentes et **en ce que** l'unité de fonctionnement (30) offre un commutateur (32) au moyen duquel l'opérateur peut passer d'un processus de cuisson automatisé à un processus de cuisson manuel, et vice versa.

4. Appareil de cuisson selon la revendication 3, **caractérisé en ce que** l'appareil de cuisson présente un compteur d'énergie (38).
